# EUROPEAN PATENT APPLICATION

(11) **EP 1 689 134 A2**
(43) Date of publication of application: **09.08.2006**
(21) Application number: 06002485.8
(22) Date of filing: 07.02.2006
(51) Int. Cl.: H04L 12/56

(54) **Method and apparatus for requesting/transmitting status report of a mobile communication system**

(30) Priority: 07.02.2005 KR 2005011202; 07.02.2005 KR 2005011203
(71) Applicant: Samsung Electronics Co., Ltd., Suwon-si, Gyeonggi-Do (KR)
(72) Inventor: Kim, Seong-Hun, Yeongtong-gu, Suwon-si, Gyeonggi-do (KR); Lee, Kook-Heui, Yeongtong-gu, Suwon-si, Gyeonggi-do (KR); Jeong, Kyeong-In, Yeongtong-gu, Suwon-si, Gyeonggi-do (KR); Kwak, No-Jun, Yeongtong-gu, Suwon-si, Gyeonggi-do (KR)
(74) Representative: Grünecker, Kinkeldey, Stockmair & Schwanhäusser Anwaltssozietät

(57) **Abstract**

A method and apparatus are provided for reducing excessive retransmission delays which may occur due to the loss of the last packet of a transmission buffer in a Radio Link Control (RLC) layer of a mobile communication system. The method includes receiving a Service Data Unit (SDU) from a higher layer, dividing the SDU into a plurality of Packet Data Units (PDUs), and storing the PDUs in a buffer, setting a poll bit for a last PDU from among the PDUs stored in the buffer, the poll bit requesting a status report, and repeatedly transmitting the last PDU having the setup poll bit at least twice from a sender to a receiver, regardless of whether there is a request for retransmission of the last PDU.

## Description

### CROSS-REFERENCE TO RELATED APPLICATIONS

This application claims the benefit under 35 U.S.C. §119(a) of Korean Patent Application Nos. 10-2005-0011202 and 10-2005-0011203 entitled "Method And Apparatus For Requesting/Transmitting Status Report Of A Mobile Communication System" filed in the Korean Industrial Property Office on February 7, 2005, the entire disclosure of each is hereby incorporated by reference.

### BACKGROUND OF THE INVENTION

### Field of the Invention:

The present invention relates to a mobile communication system. More particularly, the present invention relates to a method and an apparatus for requesting/transmitting a status report in order to reduce delay which occurs at the time of packet retransmission in a mobile communication system.

### Description of the Related Art:

Current mobile communication systems have evolved beyond the initial systems provided mainly for voice communication services, and are now developing toward high speed and high quality wireless data packet communication systems for providing data services and multimedia services. Especially, the Universal Mobile Telecommunication Service (UMTS) system, which is a third generation (3G) mobile communication system using a Wideband Code Division Multiple Access (WCDMA) based on Global System for Mobile communications (GSM) General Packet Radio Services (GPRS) employed in Europe, provides a consistent service by which users of mobile phones or computers can transmit packet-based text, digitalized voice or video, and multimedia data at a high speed of at least 2 Mbps, regardless of the users' global positions.

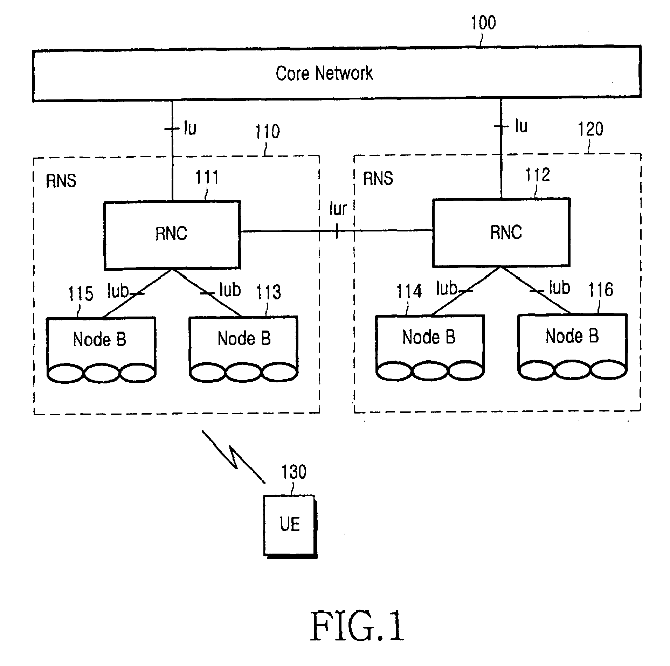

FIG. 1 is a block diagram schematically illustrating a typical UMTS mobile communication system.

Referring to FIG. 1, the UMTS system comprises a Core Network (CN) 100 and a plurality of Radio Network Subsystems (RNSs) 110 and 120. The RNSs 110 and 120 constitute a UMTS Terrestrial Radio Access Network (UTRAN). In order to connect the UTRAN with a packet data network such as the Internet, the CN 100 comprises a Serving GPRS Support Node (SGSN) and a Gateway GPRS Support Node (GGSN).

The RNSs 110 and 120 comprise Radio Network Controllers (RNCs) 111 and 112, and a plurality of Node Bs 115, 113, 114, and 116. Specifically, the RNS 110 comprises the RNC 111 and Node Bs 115 and 113, and the RNS 120 comprises the RNC 112 and Node Bs 114 and 116. The RNCs 111 and 112 can be classified as a serving RNC, a drift RNC, and a control RNC, according to their roles. The serving RNC controls communication information of a User Equipment (UE) 130 and exchanges data with the CN 100. The drift RNC directly connects with the UE 130 by wireless communication, and the control RNC controls radio resources of each Node B.

The RNCs 111 and 112, and the Node Bs 115, 113, 114, and 116 are interconnected through interfaces labeled "lub," and the RNCs 111 and 112 are interconnected through an interface labeled "lur." Although not shown in FIG. 1, the UE 130 and the UTRAN are interconnected through an interface "Uu." Each of the RNCs 111 and 112 allocate radio resources to the multiple Node Bs 115 and 113 or 114 and 116, which are controlled by the RNC itself. Each of the Node Bs 115, 113, 114, and 116, provide the allocated radio resources to the UE 130. The radio resources are arranged according to each cell, and the radio resources provided by each Node B corresponds to radio resources for a specific cell.

The UE 130 sets radio channels by using the radio resources for specific cells controlled by the Node Bs 115, 113, 114, and 116, and transmits/receives data through the setup radio channels. The UE 130 identifies the physical channels only based on the cells. Therefore, it is of little significance to distinguish between the Node B and the cell, and the Node B and the cell will be used without distinction between them in the following description.

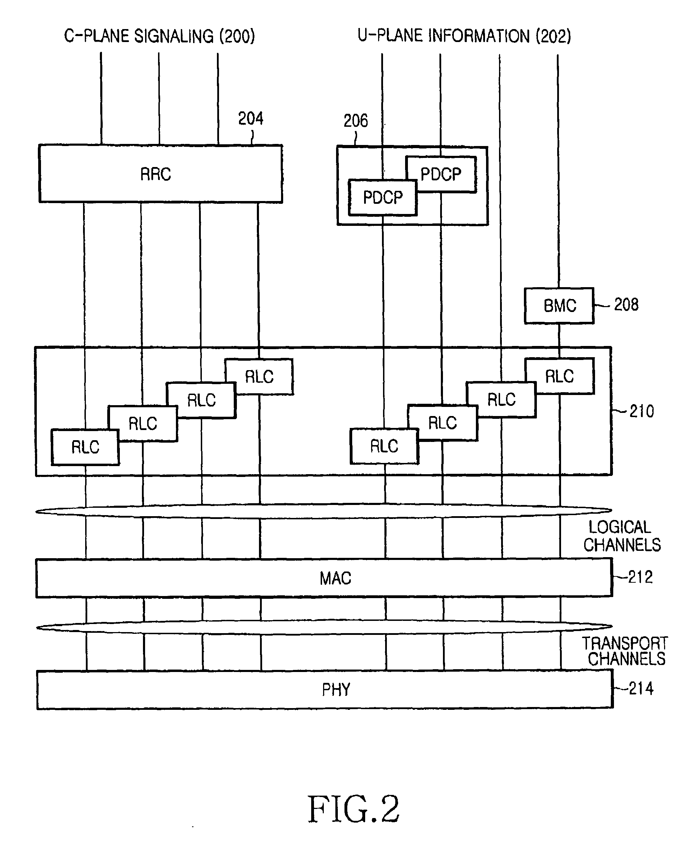

FIG. 2 illustrates a structure of a typical Uu interface between the UE 130 and the RNCs 111 and 112 in detail. As shown in FIG. 2, the Uu interface has a structure comprising a control plane and a user plane. The control plane enables the exchange of a control signal between the UE and the RNC, and the user plane enables the transmission of user data between the UE and the RNC.

When a signal of the control plane is processed, the signal passes through a Radio Resource Control (RRC) layer 204, a Radio Link Control (RLC) layer 210, a Medium Access Control (MAC) layer 212, and a physical (PHY) layer 214. When information 202 of the user plane is processed, the information passes through a Packet Data Convergence Protocol (PDCP) layer 206, a Broadcast/Multicast Control (BMC) layer 208, the RLC layer 210, the MAC layer 212, and the physical layer 214.

The physical layer 214 is a layer for providing an information transmission service using a radio transmission technology, and corresponds to the first layer (L1) from among the seven Open System Inter-working (OSI) layers. The physical layer 214 is connected through transport channels to the MAC layer 212. Through the transport channels, data is exchanged between the MAC layer 212 and the physical layer 214. A transport Format (TF) of the transport channels is defined by a scheme according to which specific data is processed in the physical layer 214.

The MAC layer 212 receives data through logical channels from the RLC layer 210 and transfers the data to the physical layer 214 through proper transport channels. Also, the MAC layer 212 receives data through the transport channels from the physical layer 214 and then transfers the data to the RLC layer 210 through proper logical channels. Further, the MAC layer 212 inserts additional information to the data received through the logical channels or the transport channels, or analyzes additional information inserted in received data, so as to perform proper operations or control random access operations. The MAC layer 212 and the RLC layer 210 are interconnected through the logical channels. The MAC layer 212 includes several sub-layers.

The RLC layer 210 takes charge of setup and release of the logical channels. Each entity of the RLC layer 210 may operate in one of an Acknowledged Mode (AM), Unacknowledged Mode (UM), and a Transparent Mode (TM). The three operation modes are distinguished by differences in the functions which they provide. The RLC AM entity of the sender performs segmentation, concatenation, or padding of data from the higher layer, i.e. RLC Service Data Unit (RLC SDU), thereby generating segments, each of which having a size that is proper for transmission through a radio channel. Then, the RLC AM entity inserts information about the segmentation/concatenation/padding to the segments, generates Protocol Data Units (PDUs) by inserting sequence numbers to the segments, and then transmits the RLC PDUs to the lower layer, the MAC layer 212. The RLC AM entity of the receiver checks the sequence numbers of the RLC PDUs transmitted from the sender in order to determine if there is any RLC PDU which the entity failed to receive, and requests retransmission of such an RLC PDU. As noted, an important characteristic of the RLC AM entity is that it supports retransmission of the RLC PDU. Especially, the RLC PDU used by the RLC AM is called "AMD PDU (AM Data PDU)."

The PDCP layer 206 is located above the RLC layer 210. The PDCP layer 206 compresses headers of data transmitted in the form of Internet Protocol (IP) packets and transfers data without loss in a situation in which the service providing RNC changes due to the mobility of the UE. The BMC layer 208 is also located above the RLC layer 210. The BMC layer 208 supports a broadcast service for transmitting the same data to a plurality of unspecified UEs located within a specific cell. The RRC layer 204 allocates or releases radio resources between the UTRAN and the UE.

As described above, when the RLC operates in the Acknowledged Mode (AM), the receiver requests retransmission of the packet which has not been received, and the retransmission request is transferred through the transmission of a message named "status report." However, when the receiver fails to receive the final packet, the receiver side cannot recognize the fact that it is necessary to request the retransmission, so that too much delay occurs for the retransmission request.

Accordingly, a need exists for a system and method to efficiently and effectively reduce delays which occur at the time of packet retransmission in a mobile communication system.

### SUMMARY OF THE INVENTION

Accordingly, embodiments of the present invention have been made to solve the above-mentioned and other problems occurring in the prior art, and an object of embodiments of the present invention is to provide a method and apparatus for reducing excessive retransmission delay which may occur due to the loss of the last packet of a transmission buffer in a Radio Link Control (RLC) layer of a mobile communication system.

It is another object of embodiments of the present invention to provide a method and apparatus for repeatedly transmitting the last packet of a transmission buffer several times, regardless of a retransmission request of a receiver in a Radio Link Control (RLC) layer of a mobile communication system.

It is another object of embodiments of the present invention to provide a method and apparatus for transmitting a status report of a receiver when a sufficient number of packets for reconstruction of a packet from a higher layer are not received before a predetermined timer expires in a Radio Link Control (RLC) layer of a mobile communication system.

In order to accomplish these and other objects, a method is provided for requesting a status report for retransmission control in a mobile communication system, the method comprising the steps of (1) receiving a Service Data Unit (SDU) from a higher layer, dividing the SDU into a plurality of Packet Data Units (PDUs), and storing the PDUs in a buffer, (2) setting a poll bit for a last PDU from among the PDUs stored in the buffer, the poll bit requesting a status report, and (3) repeatedly transmitting the last PDU having the setup poll bit at least twice from a sender to a receiver regardless of whether there is a request for retransmission of the last PDU.

In accordance with another aspect of embodiments of the present invention, an apparatus is provided for requesting a status report for retransmission control in a Radio Link Control (RLC) layer of a mobile communication system, the apparatus comprising a Packet Data Unit (PDU) construction block for receiving a Service Data Unit (SDU) from a higher layer and dividing the SDU into a plurality of PDUs, a transmission buffer for storing the PDUs in a buffer, a poll bit setting block for setting a poll bit for a last PDU from among the PDUs stored in the buffer, the poll bit requesting a status report, and a ciphering block for ciphering the last PDU having the setup poll bit and transmitting the last PDU to a receiver, wherein the last PDU is repeatedly transmitted at least twice from a sender to the receiver regardless of whether there is a request for retransmission of the last PDU.

In accordance with another aspect of embodiments of the present invention, a method is provided for transmitting a status report for retransmission control in a mobile communication system, the method comprising the steps of (1) receiving a PDU through a lower layer from a sender, the received PDU having a setup poll bit which requests a status report, (2) determining if the received PDU is a retransmitted PDU, (3) ignoring the poll bit of the received PDU without transmitting the status report when the received PDU is a retransmitted PDU, and (4) transmitting the status report in response to the poll bit when the received PDU is not a retransmitted PDU.

In accordance with another aspect of embodiments of the present invention, an apparatus is provided for transmitting a status report for retransmission control in a mobile communication system, the apparatus comprising a deciphering block for receiving a PDU through a lower layer from a sender and deciphering the received PDU, the received PDU having a setup poll bit which requests a status report, a reception buffer for storing the deciphered PDU until the deciphered PDU is reconstructed into a corresponding SDU, a control block which ignores the poll bit of the received PDU without transmitting the status report when the received PDU is a retransmitted PDU, and transmits the status report in response to the poll bit when the received PDU is not a retransmitted PDU, and a transmission block for transmitting the status report to the sender.

In accordance with another aspect of embodiments of the present invention, a method is provided for transmitting a status report for retransmission control in a mobile communication system, the method comprising the steps of receiving a Protocol Data Unit (PDU) through a lower layer from a sender, determining if a sequence number of the received PDU is larger than a maximum sequence number from among sequence numbers of already received PDUs and when the sequence number of the received PDU is larger than the maximum sequence number, stopping a timer for generating a status report trigger and then determining if it is possible to reconstruct a complete Service Data Unit (SDU) by using at least a part of the PDUs stored in the reception buffer. The method further comprises the steps of restarting the timer when it is substantially impossible to reconstruct the complete SDU, and transmitting the status report to the sender when the timer expires.

In accordance with another aspect of embodiments of the present invention, an apparatus is provided for transmitting a status report for retransmission control in a mobile communication system, the apparatus comprising a deciphering block for receiving and deciphering a Protocol Data Unit (PDU) transmitted through a lower layer from a sender, a reception buffer for storing the deciphered PDU until the deciphered PDU is reconstructed into a corresponding SDU, and a control block which stops a timer for generating a status report trigger and then determines if it is possible to reconstruct a complete Service Data Unit (SDU) by using at least a part of the PDUs stored in the reception buffer when the sequence number of the received PDU is larger than the maximum sequence number, restarts the timer when it is impossible to reconstruct the complete SDU, and transmits the status report to the sender when the timer expires.

### BRIEF DESCRIPTION OF THE DRAWINGS

The above and other objects, features and advantages of embodiments of the present invention will become more apparent from the following detailed description taken in conjunction with the accompanying drawings, in which:
FIG. 1 is a block diagram schematically illustrating a typical UMTS mobile communication system;
FIG. 2 illustrates a structure of a typical Uu interface between the UE and the RNC of FIG. 1 in detail;
FIG. 3 illustrates a structure of an exemplary RLC PDU processed by an RLC AM entity according to an embodiment of the present invention;
FIG. 4 is a block diagram for illustrating a structure of an exemplary RLC AM entity according to an embodiment of the present invention;
FIG. 5 is a flowchart for illustrating an exemplary operation of an RLC AM entity according to an embodiment of the present invention;
FIG. 6 is a block diagram for illustrating exemplary problems occurring when a last PDU of a transmission buffer is lost;
FIG. 7 is a block diagram for illustrating an exemplary method for processing RLC PDUs according to a first embodiment of the present invention;
FIG. 8 is a flowchart for illustrating an exemplary transmission operation according to the first embodiment of the present invention;
FIG. 9 is a flowchart for illustrating an exemplary operation of a receiver according to the first embodiment of the present invention;
FIG. 10 is a block diagram for illustrating an exemplary method for processing RLC PDUs according to a second embodiment of the present invention;
FIG. 11 is a flowchart for illustrating an exemplary timer control operation of a receiver RLC AM entity according to the second embodiment of the present invention; and
FIG. 12 is a block diagram for illustrating an exemplary operation according to the second embodiment of the present invention.

Throughout the drawings, like reference numerals will be understood to refer to like parts, components and structures.

### DETAILED DESCRIPTION OF THE EXEMPLARY EMBODIMENTS

Hereinafter, exemplary embodiments of the present invention will be described with reference to the accompanying drawings. In the following description, a detailed description of known functions and configurations incorporated herein will be omitted when it may make the subject matter of the present invention unclear. Further, various specific definitions found in the following description are provided to help in the general understanding of embodiments of the present invention, and it is apparent to those skilled in the art that the present invention can be implemented without such definitions.

Embodiments of the present invention reduce retransmission delay by determining if there is an error in sequence numbers of received packets or loss of a packet among the packets in an RLC layer of a mobile communication system supporting retransmission of the packets. As a basis for the description of exemplary embodiments of the present invention, operations of RLC AM entities will be described in detail.

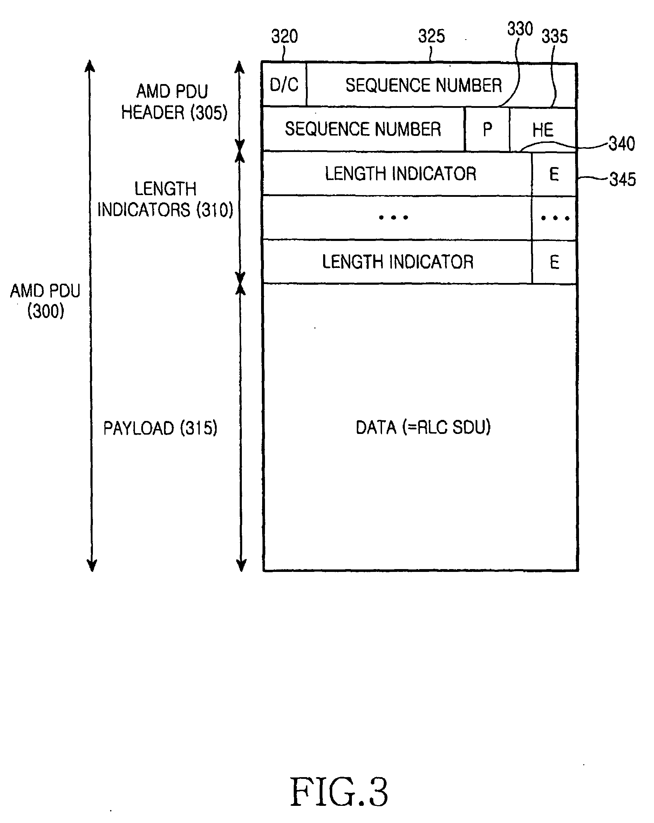

FIG. 3 illustrates a structure of an exemplary RLC PDU processed by an RLC AM entity according to an embodiment of the present invention.

Referring to FIG. 3, the RLC PDU 300 comprises a RLC PDU header 305, a length indicator part 310, and a payload 315. The RLC PDU header 305 comprises fields as follows.

A Data/Control (D/C) bit field 320 is a one bit flag which indicates if the RLC PDU includes data (i.e. RLC SDU) or only a status report. As used herein, an RLC PDU including data (i.e. RLC SDU) is called "AMD PDU." A sequence number of 12 bits is inserted in a Sequence Number (SN) field 325. The sequence number is an integer between 0 and 4095, which monotonically increases for each AMD PDU. A poll bit 330 is a field used in order to request the receiver to transmit a status report. When the poll bit 330 is set to "1," it implies that the receiver is requested to transmit a status report. The HE 335 is a two bit field which represents if the field following the HE 335 is the length indicator part 310 or the payload 315.

The length indicator part 310 is included in the RLC PDU 300 only when the payload 315 includes an RLC SDU, that is, when the RLC PDU 300 is an AMD PDU. The length indicator part 310 comprises at least one length indicator 340 and at least one extension field 345. Each length indicator 340 is a pointer which indicates the location of the end part of the RLC SDU when the RLC PDU 300 includes the end part of the RLC SDU. Therefore, when a plurality of RLC SDUs are concatenated in the RLC PDU 300, the RLC PDU 300 comprises a plurality of length indicators.

The payload 315 comprises one or more RLC SDUs. Any one RLC SDU may be divided and then inserted into a plurality of AMD PDUs, or a plurality of RLC SDUs may be concatenated and then inserted into one AMD PDU.

The RLC AM entity receives at least one RLC SDU from a higher layer, divides/concatenates/pads the RLC SDU, generates an RLC PDU by inserting an AMD PDU header 305 and one or more length indicators, and then transmits the RLC PDU to a lower layer. Thereafter, the RLC PDU is transmitted through lower layers and a radio channel to a counterpart RLC AM entity.

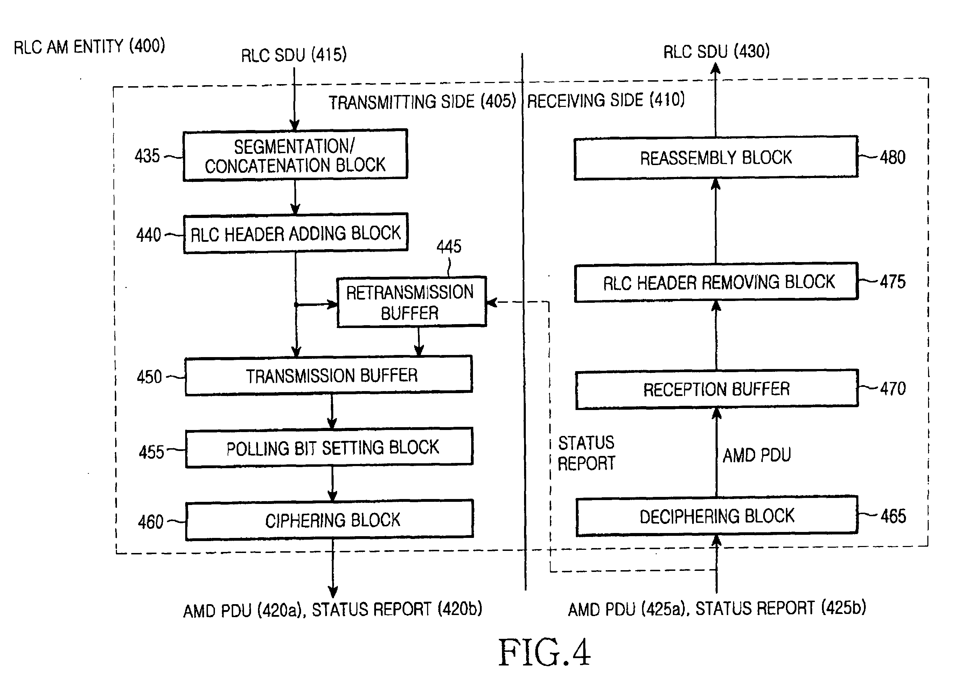

FIG. 4 is a block diagram illustrating an exemplary structure of an RLC AM entity according to an embodiment of the present invention. The RLC AM entity performs bi-directional communication, so one RLC AM entity 400 comprises both a transmitting part 405 and a receiving part 410.

Referring to FIG. 4, the transmitting part 405 generates an AMD PDU 420a by using an RLC SDU 415 which is data of a higher layer, and then transmits the generated AMD PDU 420a to a receiving part of a counterpart RLC AM entity. Further, if necessary, the transmitting part 405 transmits a status report 420b to the receiving part of a counterpart RLC AM entity. The receiving part 410 receives an AMD PDU 425a and a status report 425b from a transmitting part of a counterpart RLC AM entity, performs the retransmission if necessary, reconstructs the RLC SDU 430 by using the AMD PDU 425a, and transmits the RLC SDU 430 to a higher layer.

Specifically, the transmitting part 405 of the RLC AM entity 400 comprises a segmentation/concatenation block 435, an RLC header adding block 440, a retransmission buffer 445, a transmission buffer 450, a poll bit setting block 455, and a ciphering block 460.

When the transmitting part 405 of the RLC AM entity 400 has received the RLC SDU 415, the segmentation/concatenation block 435 segments or concatenates the RLC SDU 415 to generate data having a predetermined proper size. Further, the RLC header adding block 440 inserts an AMD PDU header to the proper size data, thereby generating an AMD PDU. The AMD PDU generated by the RLC header adding block 440 is transmitted to the retransmission buffer 445 and the transmission buffer 450. The AMD PDU is stored in the transmission buffer 450 before it is transmitted.

The MAC layer (not shown) determines whether to transmit the AMD PDUs stored in the transmission buffer 450 or not. At each transmission period, the MAC layer determines the number of AMD PDUs to be transmitted. Then, the AMD PDUs stored in the transmission buffer 450 are output to the poll bit setting block 455 according to the command of the MAC layer. The poll bit setting block 455 sets P bits of the output AMD PDUs. If polling is necessary, the P bit is set to "1." Otherwise, the P bit is set to "0." Upon receiving the AMD PDU from the poll bit setting block 455, the ciphering block 460 ciphers and transmits the AMD PDU with the exception of the AMD PDU header, thereby preventing a third party from interpreting the AMD PDU 420a.

The status report 420b is constructed by a control unit (not shown) of the RLC AM entity 400 when necessary, and is transmitted by the transmitting part 405 without being ciphered. The status report comprises information representing the reception status of the AMD PDUs which have been received up to the time point when the status report is transmitted. Based on the status report, the counterpart determines the AMD PDU which it will retransmit. The control unit determines if a status report trigger has occurred according to one of the following exemplary embodiments of the present invention. When a status report trigger has occurred, the control unit generates the status report. As described herein, the control unit belongs to the receiving part 410, because the control unit determines, by monitoring the AMD PDUs received by the receiving part 410, if the status report trigger has occurred.

The receiving part 410 of the RLC AM entity 400 comprises a deciphering block 465, a reception block 470, an RLC header removing block 475, an SDU reassembly block 480, and the control unit (not shown) as described above. The AMD PDU 425a received by the receiving part 410 is deciphered by the deciphering block 465 and is then transferred to the reception block 470. Until a complete SDU is reconstructed, the reception block 470 stores the AMD PDUs from the deciphering block 465 according an order of their sequence numbers. When an AMD PDU having the same sequence number as that of an already stored AMD PDU is retransmitted, the reception block 470 either disregards the retransmitted AMD PDU or replaces the already stored AMD PDU with the retransmitted AMD PDU. When it is possible to reconstruct the SDU, the AMD PDUs relating to the SDU are transmitted to the RLC header removing block 475 which then eliminates headers from the AMD PDUs. Then, the SDU reassembly block 480 reconstructs the AMD PDUs relating to the SDU into the SDU, and then transmits the reconstructed SDU to a higher layer.

Upon receiving the status report 425b from the counterpart RLC AM entity, the receiving part 410 transfers the status report 425b to the retransmission buffer 445 of the transmitting part 405, thereby helping the retransmission buffer 445 to determine the AMD PDUs to be retransmitted.

In exemplary embodiments of the present specification, the sender refers to an RLC AM entity which mainly transmits the RLC SDU at a corresponding time point, and the receiver transmits an RLC AM entity which mainly transmits the status report at the corresponding time point. For example, in a downlink service such as a File Transfer Protocol (FTP), a user serves as the receiver because the user receives data and transmits a status report in response to the data reception, and a network serves as the sender because it transmits the data, receives the status report, and then performs the retransmission. That is, the RLC AM entity serving as the sender transmits the RLC SDU through its transmitting part and receives the status report through its receiving part, and the RLC AM entity serving as the receiver receives the RLC SDU through its receiving part and transmits the status report through its transmitting part.

As described above, the RLC AM entity supports Automatic Retransmission Request (ARQ) operation. The receiver checks sequence numbers of the received AMD PDUs, and transmits a status report reporting failure in receiving any PDU. Based on the status report, the sender performs retransmission of the non-received PDU. The status report may be transmitted either according to a command of the sender or based on the determination by the receiver itself.

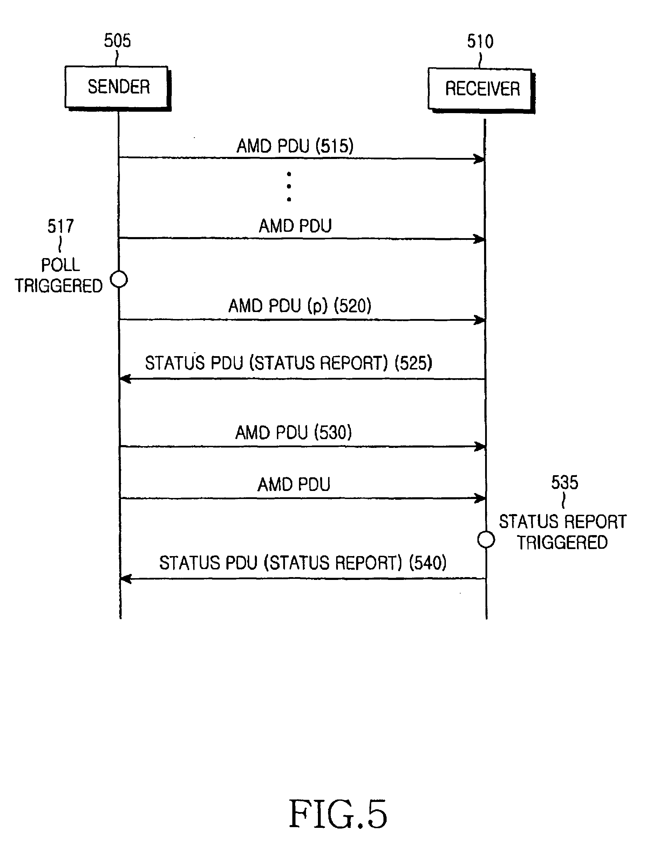

FIG. 5 is a flowchart illustrating an exemplary operation of an RLC AM entity according to an embodiment of the present invention.

In step 515, the sender 505 transmits AMD PDUs to the receiver 510. When predetermined requirements are satisfied in step 517, the sender 505 sets and transmits poll bits of the AMD PDUs in step 520. As used herein, poll trigger refers to conditions satisfying requirements for setup of the poll bits and can be defined as follows, but is not limited thereto.
- When a PDU remaining in the transmission buffer is the last PDU, the poll bits of the AMD PDUs can be set up;
- When a PDU remaining in the retransmission buffer is the last PDU, the poll bits of the AMD PDUs can be set up;
- Whenever a predetermined number of AMD PDUs are transmitted, the poll bit can be set up; and
- At each predetermined period, the poll bit can be set up.

The sender may include more than one poll trigger. Then, when one of the poll triggers occurs, the sender sets the poll bits.

Upon receiving an AMD PDU having a setup poll bit, the receiver 510 generates and transmits a status report to the sender 505 in step 525. In this step, an RLC PDU including the status report is called "status PDU." For example, the status report comprises information of both sequence numbers of PDUs received up to the current time point and sequence numbers of PDUs which have not yet been received.

Whenever receiving an AMD PDU, the receiver 510 confirms a sequence number of the received AMD PDU and manages parameters named VR(R) and VR(H). The parameter VR(R) stores a value obtained by adding "1" to a sequence number of an AMD PDU which has been received most recently from among the AMD PDUs arranged in sequence. The sequential arrangement of AMD PDUs implies that there has been no failure in reception of the PDUs. When PDU[x] is defined as an AMD PDU having a sequence number of x, if the receiver 510 is, for example, receiving and buffering PDU[1], PDU[2], PDU[3], and PDU[5], the PDU[1], PDU[2], and PDU[3] are in a state in which they have been arranged in sequence and the parameter VR(R) has a value of 4. That is to say, VR(R) represents a sequence number of an AMD PDU which is expected to be received. When the receiver 510 has received an AMD PDU having the same sequence number as VR(R), the receiver 510 updates the VR(R) according to the received AMD PDU. In the above example, when PDU[4] has been received, the VR(R) is updated to 6.

The parameter VR(H) stores a value obtained by adding "1" to the highest sequence number from among the sequence numbers of the AMD PDUs received and buffered up to the current time point. The parameter VR(H) is used to identify the non-received PDU. When an AMD PDU has been received and a sequence number of the received AMD PDU is larger than or equal to the current value of the VR(H), the parameter VR(H) is updated.

The status report comprises the value of the VR(R), which reports the AMD PDUs received up to the current time point to the sender. Further, the status report comprises sequence numbers of the AMD PDUs which have not been received up to the current time point.

Upon receiving the status report, the sender 505 discards from the retransmission buffer the AMD PDUs which are identified to have been received by the receiver 510, and retransmits the AMD PDUs which are identified to have not been received by the receiver 510.

In step 530, the sender 505 transmits a new or retransmission AMD PDU to the receiver 510. When a predetermined condition is satisfied, the receiver 510 generates and transmits a status report to the receiver 510 in step 540. As used herein, it is said that a status report is triggered, when requirements for transmission of a status report are satisfied. The status trigger can be defined as follows, but is not limited thereto.
- When a non-received PDU is detected, the status report can be transmitted. That is, when a sequence number of a received AMD PDU is larger than VR(H), it is determined that there is a non-received PDU. For example, when the VR(H) is 10 and PDU[11] is received, it is determined that PDU[10] is not received;
- When an AMD PDU having a setup poll bit is received, the status report can be transmitted; and
- At each predetermined period, the status report can be transmitted.

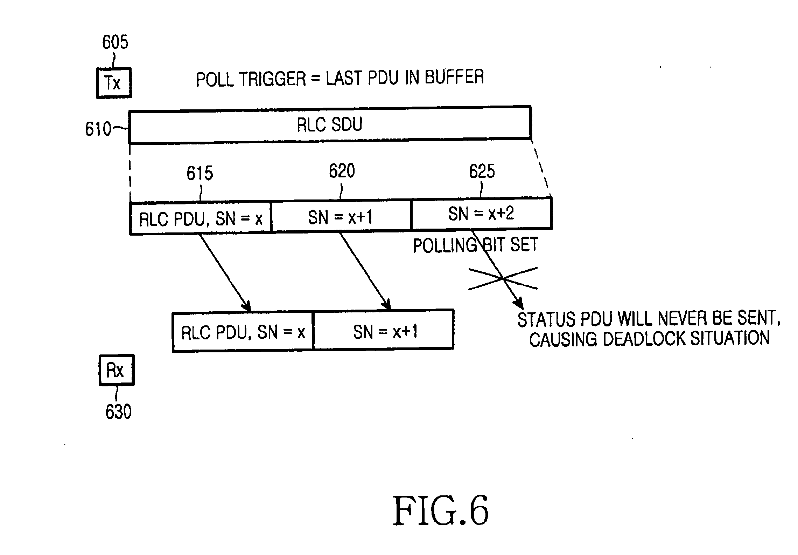

As described above, either the sender commands the receiver to transmit a status report or the receiver spontaneously transmits a status report, so that the sender recognizes PDUs which the receiver failed to receive, and then retransmits the PDUs. However, in a special situation, the receiver may be unable to transmit a status report or may transmit the status report with a considerable time delay. Such a situation will be described hereinafter with reference to FIG. 6.

FIG. 6 is a block diagram for illustrating exemplary problems occurring when a last PDU of a transmission buffer is lost.

Referring to FIG. 6, the sender 605 set a poll bit for the last AMD PDU remaining in the transmission buffer. The sender 605 receives an RLC SDU 610 from a higher layer and divides the RLC SDU 610 into three RLC PDUs 615, 620, and 625. The RLC PDU 615 has a sequence number of x, the RLC PDU 620 has a sequence number of (x+1), and the RLC PDU 625 has a sequence number of (x+2). After transmitting the RLC PDU[x] 615 and the RLC PDU[x+1] 620, the sender 605 set a poll bit for the RLC PDU[x+2] and transmits the RLC PDU[x+2].

It is assumed, for example, that the receiver 630 has received the RLC PDU[x] 615 and the RLC PDU[x+1] 620, but has not received the RLC PDU[x+2] 625. However, there is no more RLC PDUs to be received after the RLC PDU[x+2] 625, and the receiver 630 cannot recognize the failure in reception of the RLC PDU[x+2] 625.

More specifically, upon receiving the RLC PDU[x+1] 620, the receiver 630 updates the VR(H) to (x+2). Thereafter, only when the receiver 630 receives a next RLC PDU (not shown) having a sequence number of (x+3), can the receiver 630 recognize that the RLC PDU[x+2] 625 having the sequence number (x+2) has not been received. However, because the RLC PDU[x+2] 625 having the sequence number (x+2) is the final PDU to be transmitted, the receiver 630 cannot recognize that there is a PDU which has not been received. Therefore, the status report is not triggered in spite of the fact that there is a PDU which has not been received. Further, because the RLC PDU[x+2] 625 having a setup poll bit is lost during its transmission, there is no triggering of the status report by the poll bit.

Usually, an RRC message including control information of an RRC layer is divided into a plurality of RLC PDUs by an RLC AM entity. Therefore, it is necessary to rapidly transmit the RRC message to the counterpart, because the RRC message may include various control information in relation to the RRC connection during a call processing procedure. Further, only after it is confirmed that one RRC message is completely received, does the RRC layer transmit the next RRC message. Therefore, delay in retransmission of the RRC messages may be a cause which significantly increases the delay in the call processing.

In the above-mentioned situation, the sender 605 cannot recognize the failure in the reception of the RLC PDU[x+2] 625 and does not perform the retransmission. Even when the receiver 630 has been set to periodically transmit a status report, the failure in the reception of the RLC PDU[x+2] 625 is not recognized before the next period for the periodic transmission of the status report, so the retransmission is delayed as much. When there is no setup for periodic transmission of the status report by the receiver 630, the receiver 630 cannot require retransmission of the RLC PDU[x+2] 625 before it receives an RLC PDU by the next RLC SDU.

### First Exemplary Embodiment

According to a first exemplary embodiment of the present invention, in order to solve the above-mentioned and other problems, when a poll bit of an AMD PDU to be transmitted has been set up and the AMD PDU is the last PDU stored in the buffer, that is, when there is no AMD PDU to be transmitted after the last AMD PDU, the last AMD PDU having the setup poll bit is repeatedly transmitted several times. At this time, the last AMD PDU having the setup poll bit is repeatedly transmitted a predetermined number of times, regardless of whether there is a retransmission request from the receiver.

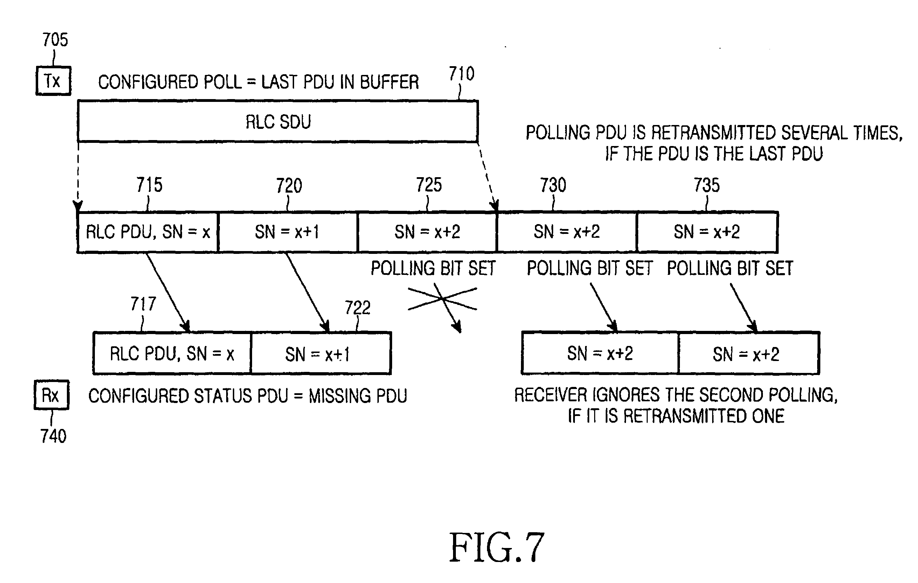

FIG. 7 is a block diagram for illustrating an exemplary method for processing RLC PDUs according to the first embodiment of the present invention.

Referring to FIG. 7, the sender 705 receives the RLC SDU 710, divides the RLC SDU 710 into three RLC PDUs 715, 720, and 725, and stores the three divided RLC PDUs 715, 720, and 725 in a buffer. For example, the RLC PDU 715 has a sequence number of x, the RLC PDU 720 has a sequence number of (x+1), and the RLC PDU 725 has a sequence number of (x+2). After transmitting the RLC PDU[x] 715 and the RLC PDU[x+1] 720, the sender 705 sets a poll bit for the RLC PDU[x+2] 725 and then transmits the RLC PDU[x+2] 725. At this time, because the RLC PDU[x+2] 725 is the last PDU stored in the buffer, the RLC PDU[x+2] 725 is retransmitted several times as indicated by reference numerals 730 and 735.

Upon receiving at least one of the RLC PDUs 725, 730, and 735 having the setup poll bit, the receiver 740 transmits a status report. Preferably, the receiver 740 transmits the status report only one time even when it receives more than one of the RLC PDUs 725, 730, and 735 having the setup poll bit.

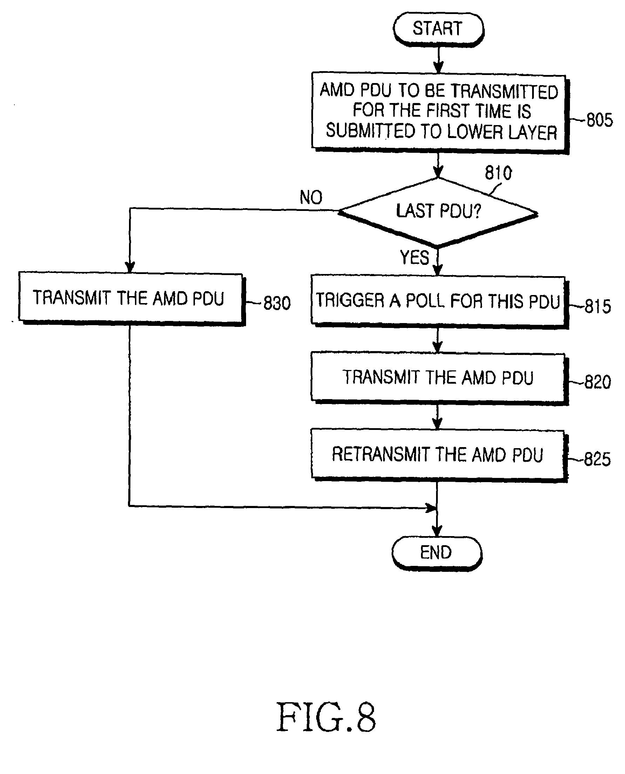

FIG. 8 is a flowchart of an exemplary transmission operation according to the first embodiment of the present invention. The transmission operation is started just before the initially transmitted AMD PDU reaches the lower layer.

Referring to FIG. 8, the AMD PDU to be transmitted is submitted to the lower layer at step 805, and the sender determines if the AMD PDU to be transmitted is the last PDU from among the scheduled PDUs at step 810. The scheduled PDUs refer to PDUs which are in a state in which the PDUs can be transmitted at any time, that is, in a state in which the PDUs are stored in the transmission buffer and the transmission of the PDUs is not inhibited due to a window operation, and so forth. Since the RLC AM entity performs a flow control through a window, the sender cannot transmit PDUs outside of the window. For example, if PDU[10] through PDU[100] are stored in a transmission buffer of an RLC AM entity and the window is formed over PDU[10] through PDU[73], the last PDU from among the scheduled PDUs is PDU[73].

If the AMD PDU to be transmitted is not the last PDU from among the scheduled PDUs, the sender proceeds to step 830 in which the sender transmits the AMD PDU. However, if the AMD PDU to be transmitted is the last PDU from among the scheduled PDUs, the sender proceeds to step 815.

Then, the sender sets the poll bit for the AMD PDU at step 815, and then transmits the AMD PDU at step 820. In step 825, the sender retransmits the AMD PDU at one or more predetermined next transmission periods. The retransmission is performed after the sender receives the status report from the receiver. However, the retransmission in step 825 can be performed regardless of the reception of the status report about the AMD PDU. This is because the receiver cannot recognize the loss of the AMD PDU as described above.

Because the sender retransmits the last AMD PDU having the setup poll bit several times, the receiver can receive the AMD PDU having the setup poll bit several times. However, because it is preferable to transmit the status report only one time, the receiver transmits the status report only one time when it has received the same AMD PDU having the setup poll bit several times in a relatively short time.

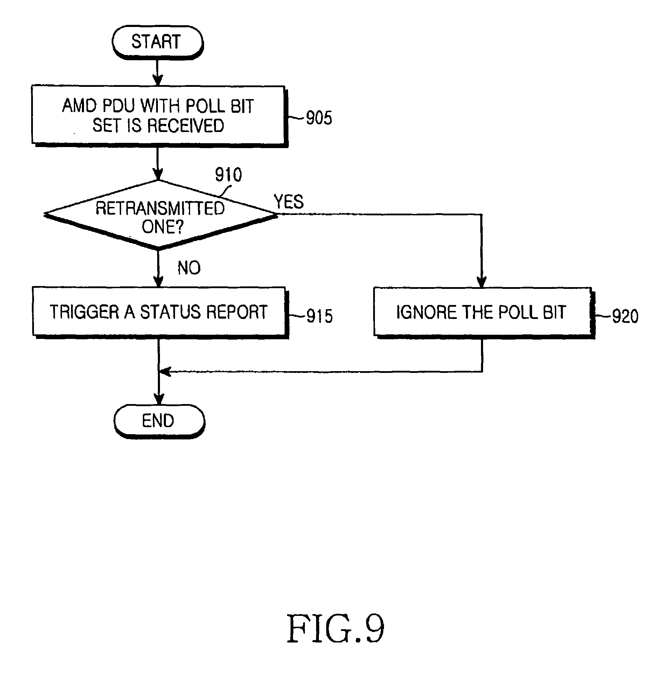

FIG. 9 is a flowchart of an exemplary operation of a receiver according to the first embodiment of the present invention. As described below, a control unit of the receiver monitors the received AMD PDUs in order to determine if a status report trigger by the poll bit has occurred.

When the receiver receives an AMD PDU having a setup poll bit at step 905, the receiver determines if the received AMD PDU is a retransmitted AMD PDU at step 910. This determination can be achieved through a comparison between the sequence number of the currently received AMD PDU and the sequence number of the most recently received AMD PDU. A more detailed description is provided below.

When the receiver has received a first AMD PDU having the setup poll bit, the receiver stores the sequence number of the AMD PDU in the parameter V(X). Thereafter, whenever receiving an AMD PDU having a setup poll bit, the receiver compares the sequence number of the received AMD PDU with the value stored in the V(X). When the two values are the same, the receiver determines that the received AMD PDU is a retransmitted AMD PDU. When the two values are different, the receiver determines that the received AMD PDU is not a retransmitted AMD PDU. When the received AMD PDU is not a retransmitted AMD PDU, the receiver updates the V(X) to the sequence number of the newly received AMD PDU.

When the received AMD PDU is not a retransmitted AMD PDU, the receiver proceeds to step 915 in which the receiver generates and transmits a status report to the sender. In contrast, when the received AMD PDU is a retransmitted AMD PDU, the receiver proceeds to step 920 in which the receiver ignores the poll bit of the AMD PDU and does not transmit the status report.

### Second Exemplary Embodiment

According to a second exemplary embodiment of the present invention, the receiver constructs and transmits a status report after the passage of predetermined time without reconstruction of the RLC PDUs stored by the receiver into an RLC SDU. In this process, the predetermined time corresponds to a time interval that is sufficient for transmission of one RLC SDU, which can be determined by tests or simulations.

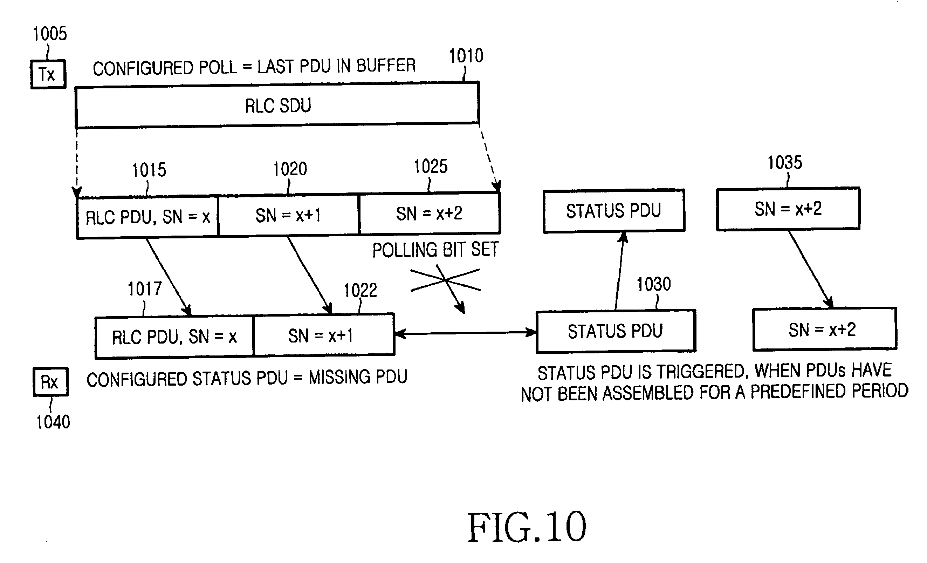

FIG. 10 is a block diagram for illustrating an exemplary method for processing RLC PDUs according to the second embodiment of the present invention.

Referring to FIG. 10, the sender 1005 receives the RLC SDU 1010 from a higher layer, divides the RLC SDU 1010 into three RLC PDUs 1015, 1020, and 1025, and stores them in a buffer. For example, the RLC PDU 1015 has a sequence number of x, the RLC PDU 1020 has a sequence number of (x+1), and the RLC PDU 1025 has a sequence number of (x+2). After transmitting the RLC PDU[x] 1015 and the RLC PDU[x+1] 1020, the sender 1005 sets a poll bit for the RLC PDU[x+2] 1025 and then transmits the RLC PDU[x+2] 1025. It is assumed, for example, that the RLC PDU[x+2] 1025 which is the last PDU stored in the buffer, is lost during its transmission.

The receiver 1040 receives the RLC PDU[x] 1017 and the RLC PDU[x+1] 1022. When the receiver 1040 has received the RLC PDU[x] 1017, the receiver 1040 starts a timer for generating a status report trigger. Thereafter, when the receiver 1040 has received the RLC PDU[x+1] 1022, the receiver 1040 restarts the timer. Specifically, the restarting of the timer comprises the steps of stopping the operating timer, initializing the timer, and then operating the timer again. When a next RLC PDU having a sequence number of (x+2) is not received before the expiration of the time which was started when the RLC PDU[x+1] 1022 was received, the receiver 1040 constructs and transmits a status report 1030. The status report 1030 comprises information reporting the reception of PDUs up to the RLC PDU 1022 having the sequence number (x+1). Upon receiving the status report, the sender 1005 recognizes the loss of the RLC PDU 1025 having the sequence number (x+2) and retransmits the RLC PDU 1035 having the sequence number (x+2).

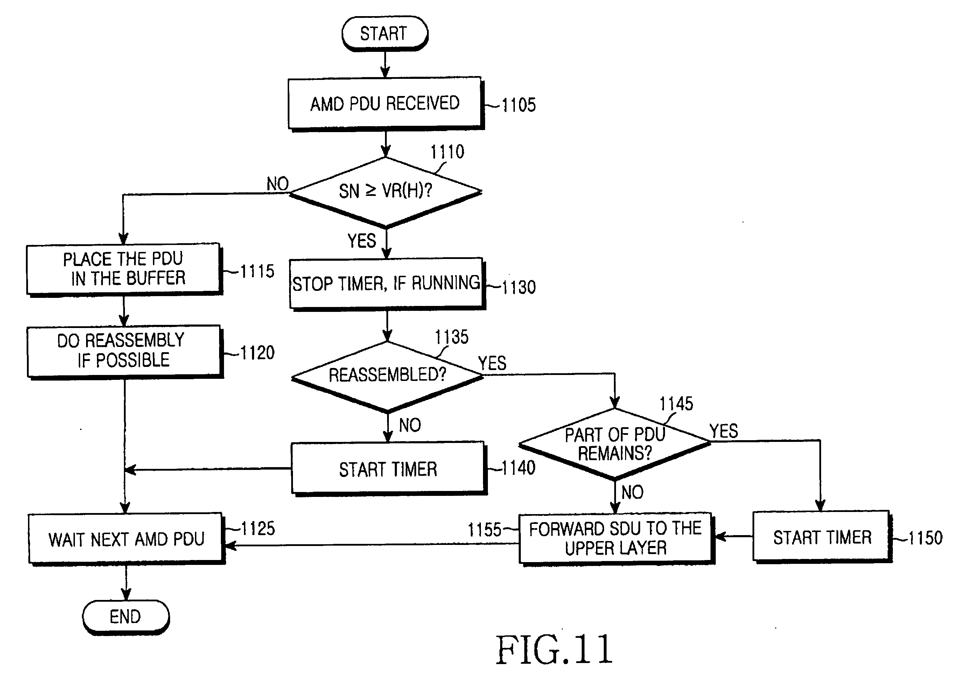

FIG. 11 is a flowchart for illustrating an exemplary timer control operation of a receiver RLC AM entity according to the second embodiment of the present invention. As described below, the control unit of the receiver monitors received AMD PDUs, manages the VR(H) and VR(R), and controls the timer.

Referring to FIG. 11, an AMD PDU is received in step 1105. In step 1110, the receiver determines if the sequence number of the received AMD PDU is smaller than the VR(H). When the sequence number of the received AMD PDU is smaller than the VR(H), the receiver proceeds to step 1115. When the sequence number of the received AMD PDU is larger than or equal to the VR(H), the receiver proceeds to step 1130.

In step 1115, the receiver stores the AMD PDU at a proper location in the buffer, so that the received AMD PDU and already stored AMD PDUs can be stored according to an order of their sequence numbers. In step 1120, if it is possible to reconstruct the RLC SDU by using the AMD PDUs stored in the reception buffer, the receiver reconstructs the RLC SDU and transmits the reconstructed RLC SDU to a higher layer. Then, in step 1125, the receiver waits for the reception of a next AMD PDU. At this time, the timer is neither stopped nor restarted.

In step 1130, if the timer is running, the receiver buffers the received AMD PDU in the reception buffer in accordance with the sequence number of the AMD PDU and stops the timer. In step 1135, the receiver determines if it is possible to reconstruct the RLC SDU by using at least a part of the AMD PDUs stored in the reception buffer. If it is possible to reconstruct the RLC SDU, the receiver proceeds to step 1145. In contrast, if it is impossible to reconstruct the RLC SDU, the receiver proceeds to step 1140. In step 1140, the receiver initializes and restarts the timer, and then proceeds to step 1125 in which the receiver waits for the next AMD PDU.

In step 1145, the receiver reconstructs the RLC SDU by using the AMD PDUs stored in the reception buffer including the received AMD PDU, and then determines if a part of the received AMD PDU remains in the reception buffer. When a part of the received AMD PDU remains in the reception buffer, the receiver proceeds to step 1150 in which the receiver operates the timer, and then proceeds to step 1155 in which the receiver transmits the reconstructed RLC SDU to a higher layer. When none of the received AMD PDU remains in the reception buffer, the receiver proceeds directly to step 1155 in which the receiver transmits the reconstructed RLC SDU to the higher layer. Then, in step 1125, the receiver waits reception of a next AMD PDU.

Step 1145 is necessary in order to guarantee normal operation even when one AMD PDU includes a plurality of RLC SDUs. That is, when the received AMD PDU includes the last part of the RLC SDU[x] and the first part of the RLC SDU[y], it is necessary to operate the timer in order to check the arrival or reception of the following AMD PDU(s) of the RLC SDU[y] even after the RLC SDU[x] is completely reconstructed. In contrast, when the received AMD PDU includes only the last part of the RLC SDU[x] and the RLC SDU[x] is reconstructed by using the received AMD PDU, it is unnecessary to operate the timer because this case implies no loss of the last AMD PDU of the RLC SDU[x].

As noted from FIG. 11, the receiver starts or stops the timer whenever receiving an AMD PDU, and transmits a status report at the time point when the timer expires.

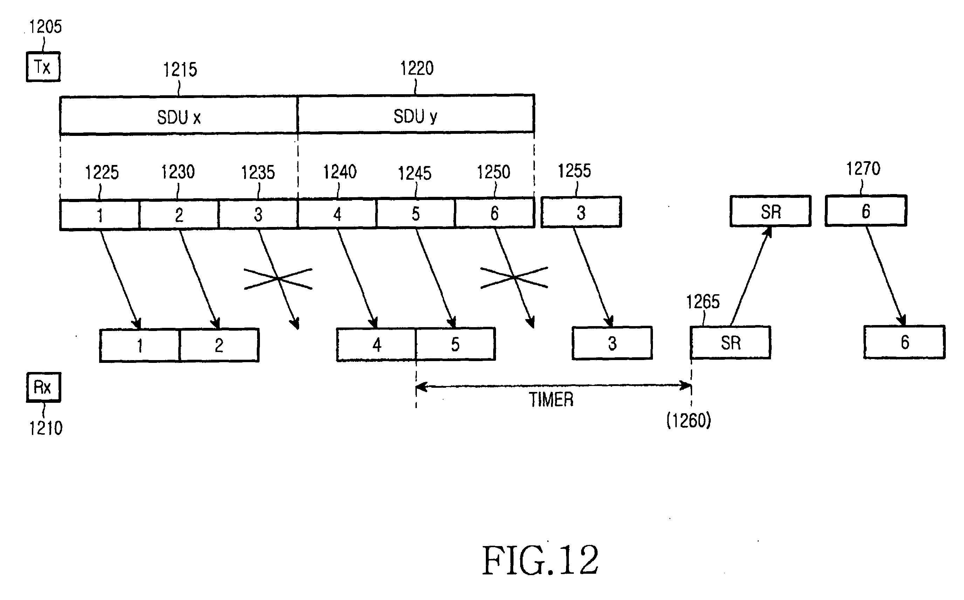

FIG. 12 is a block diagram for illustrating an exemplary operation according to the second embodiment of the present invention.

Referring to FIG. 12, the sender 1205 has two RLC SDUs to be transmitted, including RLC SDU[x] 1215 and RLC SDU[y] 1220, which are divided into six AMD PDUs 1225, 1230, 1235, 1240, 1245, and 1250 having sequence numbers from 1 to 6, respectively. It is assumed, for example, that from among the six AMD PDUs 1225 through 1250, the AMD PDUs 1235 and 1250 having the sequence numbers of 3 and 6 failed to reach the receiver 1210 and are lost. The VR(H) is 1 at the time point when the receiver 1210 receives AMD PDU[1]. Upon receiving AMD PDU[1] 1225, the receiver 1210 starts the timer and updates the VR(H) to 2.

When receiving AMD PDU[2] 1230 which has a sequence number equal to the VR(H), the receiver 1210 updates the VR(H) to 3, stops the timer, and determines if there is a reconstructable RLC SDU, as performed in steps 1130 and 1135 of FIG. 11. Because there is no reconstructable RLC SDU, the receiver 1210 restarts the timer and waits for the arrival of a next AMD PDU.

When receiving AMD PDU[4] 1240 which has a sequence number larger than the VR(H), the receiver 1210 determines that there is a non-received PDU, and transmits a status report (not shown). Based on AMD PDU[4] 1240, the VR(H) is updated to 5. The transmitted status report contains information reporting the failure in the reception of AMD PDU[3]. Further, because this case corresponds to a case in which the sequence number is larger than or equal to the VR(H), the receiver 1210 stops the timer and determines if there is a reconstructable RLC SDU, as performed in steps 1130 and 1135 of FIG. 11. Because there is no reconstructable RLC SDU, the receiver 1210 restarts the timer.

When receiving AMD PDU[5] which has a sequence number equal to the VR(H), the receiver 1210 stops the timer and determines if there is a reconstructable RLC SDU, as performed in steps 1130 and 1135 of FIG. 11. Because there is no reconstructable RLC SDU, the receiver 1210 restarts the timer and waits for arrival of a next AMD PDU. The receiver 1210 updates the VR(H) to 6.

In response to the status report, the sender 1205 retransmits the AMD PDU[3] 1255. Then, the receiver 1210 receives the AMD PDU[3] 1255 which has a sequence number smaller than the VR(H), and then performs the operations steps 1115 through 1125 of FIG. 11. At this time, because it is possible to reconstruct the RLC SDU[x] by using the RLC PDU[1], the RLC PDU[2], and the RLC PDU[3], the receiver 1210 transmits the reconstructed RLC SDU[x] to a higher layer and waits for arrival of a next AMD PDU.

The timer expires at the time point 1260 because it has not been stopped after being started when the AMD PDU[5] 1145 is received. Then, according to the expiration of the timer, the receiver 1210 transmits a status report 1265 to the sender 1205. The status report 1265 comprises information reporting the failure in the reception of the AMD PDU[6] 1250. Therefore, the sender 1205 recognizes loss of the AMD PDU[6] 1250 and retransmits the AMD PDU[6] 1270.

According to embodiments of the present invention as described above, even when the last PDU stored in a buffer of the sender is lost during its transmission, the receiver can recognize the loss and transmit a status report for the loss, so that the sender can rapidly overcome the retransmission error.

While embodiments of the present invention have been shown and described with reference to certain exemplary embodiments thereof, it will be understood by those skilled in the art that various changes in form and details may be made therein without departing from the spirit and scope of the invention as defined by the appended claims.

## Claims

1. A method for requesting a status report for retransmission control in a mobile communication system, the method comprising the steps of:
(1) receiving a Service Data Unit (SDU) from a higher layer, dividing the SDU into a plurality of Packet Data Units (PDUs);
(2) setting a poll bit for a last PDU from among the PDUs, the poll bit requesting a status report; and
(3) repeatedly transmitting the last PDU having the setup poll bit from a sender to a receiver regardless of whether there is a request for retransmission of the last PDU.

2. The method as claimed in claim 1, wherein the SDU comprises a Radio Resource Control (RRC) message comprising control information of an RRC layer.

3. The method as claimed in claim 2, wherein the last PDU comprises last data divided from the RRC message.

4. The method as claimed in claim 1, wherein the status report comprises:
a sequence number of a PDU which is expected to be received at a time point when the status report is transmitted; and
a sequence number of a PDU which has been identified as being a non-received unit at the time point when the status report is transmitted.

5. The method as claimed in claim 1, wherein step (1) comprises the steps of:
segmenting, concatenating, or padding the SDU into data having a predetermined size; and
adding at least one of a data/control bit field, a sequence number field, a poll bit field for indicating whether to request a status report or not, and a length indicator indicating a location of an end of an SDU included in a corresponding PDU to the data having the predetermined size, thereby constructing the corresponding PDU.

6. The method as claimed in claim 1, wherein the last PDU comprises last data divided from the SDU.

7. The method as claimed in claim 1, wherein the last PDU comprises a last scheduled PDU stored in the buffer.

8. An apparatus for requesting a status report for retransmission control in a Radio Link Control (RLC) layer of a mobile communication system, the apparatus comprising:
a Packet Data Unit (PDU) construction block for receiving a Service Data Unit (SDU) from a higher layer and dividing the SDU into a plurality of PDUs;
a transmission buffer for storing the PDUs in a buffer;
a poll bit setting block for setting a poll bit for a last PDU from among the PDUs stored in the buffer, the poll bit requesting a status report; and
a ciphering block for ciphering the last PDU having the setup poll bit and transmitting the last PDU to a receiver,
wherein the last PDU is repeatedly transmitted from a sender to the receiver regardless of whether there is a request for retransmission of the last PDU.

9. The apparatus as claimed in claim 8, wherein the SDU comprises a Radio Resource Control (RRC) message containing control information of an RRC layer.

10. The apparatus as claimed in claim 9, wherein the last PDU comprises last data divided from the RRC message.

11. The apparatus as claimed in claim 8, wherein the status report comprises:
a sequence number of a PDU which is expected to be received at a time point when the status report is transmitted; and
a sequence number of a PDU which has been identified as being a non-received unit at the time point when the status report is transmitted.

12. The apparatus as claimed in claim 8, wherein the PDU construction block comprises:
a segmentation/concatenation block for segmenting, concatenating, or padding the SDU into data having a predetermined size; and
an RLC header adding block for adding at least one of a data/control bit field, a sequence number field, a poll bit field for indicating whether to request a status report or not, and a length indicator indicating a location of an end of an SDU included in a corresponding PDU to the data having the predetermined size, thereby constructing the corresponding PDU.

13. The apparatus as claimed in claim 8, wherein the last PDU comprises last data divided from the SDU.

14. The apparatus as claimed in claim 8, wherein the last PDU comprises a last scheduled PDU stored in the buffer.

15. A method for transmitting a status report for retransmission control in a mobile communication system, the method comprising the steps of:
(1) receiving a PDU through a lower layer from a sender, the received PDU having a setup poll bit which requests a status report;
(2) determining if the received PDU is a retransmitted PDU;
(3) ignoring the poll bit of the received PDU without transmitting the status report when the received PDU is a retransmitted PDU; and
(4) transmitting the status report in response to the poll bit when the received PDU is not a retransmitted PDU.

16. The method as claimed in claim 15, wherein the status report comprises:
a sequence number of a PDU which is expected to be received at a time point when the status report is transmitted; and
a sequence number of a PDU which has been identified as being a non-received unit at the time point when the status report is transmitted.

17. The method as claimed in claim 15, wherein step (2) comprises the step of:
determining that the received PDU is a retransmitted PDU when the received PDU has a sequence number equal to a sequence number of a most recently received PDU having a setup poll bit.

18. The method as claimed in claim 15, further comprising the step of:
storing a sequence number of the received PDU as a sequence number of a most recently received PDU having a setup poll bit, when the received PDU is not a retransmitted PDU.

19. An apparatus for transmitting a status report for retransmission control in a mobile communication system, the apparatus comprising:
a deciphering block for receiving a PDU through a lower layer from a sender and deciphering the received PDU, the received PDU having a setup poll bit which requests a status report;
a reception buffer for storing the deciphered PDU until the deciphered PDU is reconstructed into a corresponding SDU;
a control block which disregards the poll bit of the received PDU without transmitting the status report when the received PDU is a retransmitted PDU, and transmits the status report in response to the poll bit when the received PDU is not a retransmitted PDU; and
a transmission block for transmitting the status report to the sender.

20. The apparatus as claimed in claim 19, wherein the status report comprises:
a sequence number of a PDU which is expected to be received at a time point when the status report is transmitted; and
a sequence number of a PDU which has been identified as being a non-received unit at the time point when the status report is transmitted.

21. The apparatus as claimed in claim 19, wherein the reception buffer is configured to:
check a sequence number of the received PDU; and
determine that the received PDU is a retransmitted PDU when the sequence number of the received PDU is equal to a sequence number of a most recently received PDU having a setup poll bit.

22. The apparatus as claimed in claim 21, wherein, when the received PDU is not a retransmitted PDU, the sequence number of the received PDU is stored as a sequence number of a most recently received PDU having a setup poll bit.

23. A method for transmitting a status report for retransmission control in a mobile communication system, the method comprising the steps of:
receiving a Protocol Data Unit (PDU) through a lower layer from a sender;
determining if a sequence number of the received PDU is larger than a maximum sequence number from among sequence numbers of already received PDUs;
stopping a timer for generating a status report trigger when the sequence number of the received PDU is larger than the maximum sequence number, and determining if it is possible to reconstruct a complete Service Data Unit (SDU) by using at least a part of the PDUs stored in the reception buffer;
restarting the timer when it is impossible to reconstruct the complete SDU; and
transmitting the status report to the sender when the timer expires.

24. The method as claimed in claim 23, wherein the status report comprises:
a sequence number of a PDU which is expected to be received at a time point when the status report is transmitted; and
a sequence number of a PDU which has been identified as being a non-received unit at the time point when the status report is transmitted.

25. The method as claimed in claim 23, further comprising the steps of:
reconstructing the RLC SDU by using at least a part of the PDUs stored in the reception buffer when it is possible to reconstruct the RLC SDU;
determining if a part of the received PDUs remain in the reception buffer after reconstructing the RLC SDU;
restarting the timer and transmitting the RLC SDU to a higher layer when a part of the received PDUs remains in the reception buffer; and
transmitting the RLC SDU to a higher layer without restarting the timer when a part of the received PDUs does remain in the reception buffer.

26. The method as claimed in claim 23, further comprising the step of:
waiting for reception of a next PDU without stopping or restarting the timer when the sequence number of the received PDU is not larger than the maximum sequence number from among the sequence numbers of the already received PDUs.

27. An apparatus for transmitting a status report for retransmission control in a mobile communication system, the apparatus comprising:
a deciphering block for receiving and deciphering a Protocol Data Unit (PDU) transmitted through a lower layer from a sender;
a reception buffer for storing the deciphered PDU until the deciphered PDU is reconstructed into a corresponding SDU; and
a control block which is configured to stop a timer for generating a status report trigger and then determine if it is possible to reconstruct a complete Service Data Unit (SDU) by using at least a part of the PDUs stored in the reception buffer when the sequence number of the received PDU is larger than the maximum sequence number, restart the timer when it is impossible to reconstruct the complete SDU, and transmit the status report to the sender when the timer expires.

28. The apparatus as claimed in claim 27, wherein the status report comprises:
a sequence number of a PDU which is expected to be received at a time point when the status report is transmitted; and
a sequence number of a PDU which has been identified as being a non-received unit at the time point when the status report is transmitted.

29. The apparatus as claimed in claim 27, wherein the control block is configured to:
reconstruct the RLC SDU by using at least a part of the PDUs stored in the reception buffer when it is possible to reconstruct the RLC SDU;
determine if a part of the received PDUs remain in the reception buffer after reconstructing the RLC SDU;
restart the timer and transmit the RLC SDU to a higher layer when a part of the received PDUs remains in the reception buffer; and
transmit the RLC SDU to a higher layer without restarting the timer when a part of the received PDUs remains in the reception buffer.

30. The apparatus as claimed in claim 27, wherein the control block is configured to:
wait for reception of a next PDU without stopping or restarting the timer when the sequence number of the received PDU is not larger than the maximum sequence number from among the sequence numbers of the already received PDUs.
